(19) Europäisches Patentamt / European Patent Office / Office européen des brevets

(11) **EP 1 981 020 A1**

(12) **DEMANDE DE BREVET EUROPEEN**

(43) Date de publication:
**15.10.2008 Bulletin 2008/42**

(51) Int Cl.:
*G10L 15/18* (2006.01)          *G10L 15/22* (2006.01)

(21) Numéro de dépôt: **08154423.1**

(22) Date de dépôt: **11.04.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **12.04.2007  FR 0754415**

(71) Demandeur: **France Télécom**
**75015 Paris (FR)**

(72) Inventeur: **Damnati, Géraldine,**
**c/o  FRANCE TELECOM**
**22700 PERROS GUIREC (FR)**

(54) **Procédé et système de reconnaissance automatique de la parole adaptés à la détection d'énoncés hors-domaine**

(57)    Un procédé de reconnaissance automatique de la parole dans un signal acoustique correspondant à un énoncé prononcé par un utilisateur dans le cadre d'une application vocale homme-machine, comprend les étapes de :
- fabrication (203) préalable, d'une part, d'un modèle de langage spécifique ($M^S$), dit "modèle spécifique", destiné à modéliser des énoncés hors-domaine prédéfinis dits "commentaires", et d'autre part, d'un modèle de langage ($M^G$), dit "modèle général", destiné à modéliser des énoncés dans-le-domaine dits "utiles" ;
- utilisation en combinaison des modèles spécifique et général (202,302), afin de pouvoir détecter dans un énoncé à reconnaître la présence éventuelle d'au moins un commentaire ; et
- génération d'une information de détection de commentaire si au moins un commentaire a été détecté.

**FIG. 3**

EP 1 981 020 A1

**Description**

La présente invention a trait au domaine de la reconnaissance automatique d'un signal de parole. En particulier, l'invention concerne un procédé et un système de reconnaissance automatique de la parole adaptés à la détection d'énoncés hors-domaine prononcés par un utilisateur dans le cadre d'un dialogue avec une application vocale homme-machine. En particulier, l'invention concerne un modèle de langage spécialement conçu pour un système de reconnaissance vocale selon l'invention. L'invention s'applique notamment à la reconnaissance de la parole continue.

Les systèmes de dialogue interactif de type homme-machine, tels que les services vocaux interactifs (SVI) offerts par les opérateurs de téléphonie, comportent classiquement trois modules de traitement distincts :

- un module de reconnaissance automatique de la parole (en anglais : *Automatic Speech Recognition,* ASR) chargé de reconnaître les mots prononcés par un utilisateur du service vocal ;
- un module de compréhension du langage parlé (en anglais : *Spoken Language Understanding,* SLU) chargé de donner un sens aux séquences de mots délivrées par le module ASR ; et
- un module de gestion du dialogue (en anglais : *Dialog Management,* DM) chargé de déterminer une réponse appropriée à l'utilisateur, en fonction de l'interprétation par le module SLU des paroles reconnues de l'utilisateur.

Dans un tel système, le traitement effectué par le module de reconnaissance ASR est crucial pour la performance globale de l'application de dialogue, puisque l'interprétation sémantique effectuée par le module SLU de compréhension dépend du résultat du traitement effectué par le module ASR de reconnaissance. Un module de reconnaissance automatique de la parole ASR est typiquement basé sur un modèle de reconnaissance qui combine un modèle acoustique et un modèle de langage, afin de déduire d'un signal acoustique une séquence de mots, ou un graphe de mots (*word lattice* en anglais) représentant de façon compacte l'ensemble des meilleures hypothèses de phrases possibles.

Les modèles de reconnaissance sont conçus de façon à assurer une couverture maximale de ce que les utilisateurs d'un service vocal considéré peuvent prononcer, mais la couverture du vocabulaire associé au modèle de langage reste par définition limitée. L'apparition de mots hors-vocabulaire est un phénomène inévitable, c'est pourquoi les modèles actuels prévoient généralement des mécanismes de détection pour ce phénomène.

Au-delà de l'apparition d'un mot hors-vocabulaire, il arrive également que des portions d'énoncés ou des énoncés entiers soient hors-domaine (*out-of-domain,* OOD, en anglais). Il s'agit typiquement de commentaires que l'utilisateur formule à l'égard du système vocal mais qui ne relèvent pas du champ de l'application. Cela est d'autant plus fréquent lorsque l'on considère des applications vocales grand public.

En particulier, les commentaires de l'utilisateur à l'égard du système vocal qu'il utilise peuvent exprimer, par exemple, de la surprise ou de l'incompréhension : "*Qu'est ce que je dois faire* ?", de l'agacement : "*Mais je l'ai déjà dit çà !*", ou même des insultes à l'égard du système.

La présence de ce type d'énoncés hors-domaine dans les paroles de l'utilisateur peuvent déclencher un comportement erroné du système vocal, notamment lorsque ce type d'énoncés est noyé dans une séquence de mots contenant des énoncés utiles pour le dialogue, c'est-à-dire des énoncé dits "dans-le-domaine" (*in-domain utterances,* en anglais).

Par ailleurs, lorsque l'on souhaite appliquer des stratégies de reconnaissance ou de compréhension qui tiennent compte des énoncés précédents pour améliorer la prédiction sur l'énoncé courant, une reconnaissance à tort d'un énoncé hors-domaine (c'est-à-dire lorsque cet énoncé contient des mots dans le vocabulaire de l'application) perturbe la prédiction au niveau énoncé. Cela peut être rapproché de la problématique des erreurs en chaine liées à l'apparition d'un mot hors-vocabulaire en reconnaissance de parole continue.

Ainsi, il existe un réel besoin de pouvoir détecter, lors de la reconnaissance vocale par le module de reconnaissance (ASR), des énoncés hors-domaine tels que des commentaires, afin de pouvoir améliorer le traitement par le module de compréhension (SLU) de l'énoncé de l'utilisateur, et d'améliorer la réponse fournie par le module de gestion du dialogue (DM).

En fonction du résultat de cette détection, une stratégie de traitement de l'énoncé reconnu mise en oeuvre par le module de compréhension (SLU), pourrait ainsi être définie, en particulier pour déterminer quelles portions d'énoncés doivent être analysées par le module de compréhension et quelles portions doivent être simplement ignorées.

Enfin la détection et l'interprétation de commentaires de l'utilisateur vis-à-vis d'une application vocale de dialogue donnée, pourraient être avantageusement utilisées afin d'adapter la réponse de l'application vocale en fonction de ces commentaires.

Pour répondre notamment au besoin exposé ci-dessus, la présente invention concerne, selon un premier aspect, un procédé de reconnaissance automatique de la parole dans un signal acoustique correspondant à un énoncé prononcé par un utilisateur dans le cadre d'une application vocale homme-machine. Selon l'invention, ce procédé est remarquable en ce qu'il comprend les étapes suivantes :

- fabrication préalable, d'une part, d'un modèle de langage spécifique, dit "modèle spécifique", destiné à modéliser des énoncés hors-domaine prédéfinis dits "commentaires", et d'autre part, d'un modèle de langage, dit "modèle général", destiné à modéliser des énoncés dans-le-domaine dits "utiles" ;
- utilisation en combinaison desdits modèles spécifique et général, afin de pouvoir détecter dans un énoncé à reconnaître la présence éventuelle d'au moins un commentaire ; et
- génération d'une information de détection de commentaire si au moins un commentaire a été détecté.

Grâce à l'utilisation conjointe d'un modèle de langage spécifique à des énoncés hors-domaine prédéfinis tels que des commentaires, et d'un modèle de langage relatif au domaine de l'application de dialogue homme-machine considérée, il est possible de détecter très tôt dans le processus de reconnaissance, un énoncé de l'utilisateur qui correspond à un commentaire et non à une séquence de parole utile pour le dialogue en cours. Cette détection permet dans un premier temps d'améliorer la qualité de la reconnaissance vocale de l'énoncé courant de l'utilisateur. Dans un deuxième temps, en générant une information relative à une telle détection, un module de reconnaissance (ASR) mettant en oeuvre le procédé de l'invention, permet alors aux modules suivants dans la chaîne de traitement de la parole (SLU, DM), de prendre en compte cette information dans leur traitement respectif, et donc d'augmenter notablement l'efficacité globale de l'application vocale considérée.

Selon un mode de réalisation préféré, la fabrication préalable du modèle de langage spécifique aux commentaires comprend les étapes suivantes :

- constitution d'un premier corpus d'apprentissage contenant des données d'apprentissage obtenues par retranscription d'énoncés enregistrés lors d'interactions homme-machine utilisant l'application vocale ;
- annotation des données d'apprentissage du premier corpus de données de manière à séparer les segments de parole de commentaire des segments de parole utile ;
- création d'un second corpus d'apprentissage spécifique aux commentaires, par extraction des segments de commentaire annotés du premier corpus d'apprentissage ;
- définition d'un vocabulaire propre aux commentaires ;
- génération par apprentissage du modèle de langage spécifique aux commentaires à partir du corpus spécifique aux commentaires et du vocabulaire spécifique aux commentaires, dit "vocabulaire spécifique".

Une telle méthode de fabrication d'un modèle de langage spécifique à des énoncés hors-domaine tels que des commentaires d'utilisateur relatifs à une application de dialogue interactif considérée, présente l'avantage de permettre la réutilisation de ce modèle spécifique pour une autre application vocale de même type, et donc de limiter les problèmes de fonctionnement de la nouvelle application vocale, lorsque celle-ci n'a pas encore atteint un niveau d'efficacité optimale. Le corpus "spécifique" utilisé pour générer par apprentissage le modèle de langage spécifique, peut être alors enrichi de manière incrémentale par collecte de commentaires relatifs à d'autres applications vocales. Ainsi, un modèle spécifique obtenu à partir d'un tel corpus spécifique, est donc générique, dans le sens où il peut être intégré ou associé à n'importe quel nouveau modèle de langage relatif à une nouvelle application vocale, et ce dès les premières phases du cycle de vie de cette application.

Selon un premier mode de mise en oeuvre de l'invention, la fabrication préalable du modèle de langage général propre aux segments de parole utile dans l'énoncé analysé, comprend la génération par apprentissage du modèle général à partir du corpus de données initial (premier corpus), après extraction des segments de parole de commentaire annotés ; et d'un vocabulaire prédéfini propre à l'application vocale, dit "vocabulaire général".

La suppression des segments de parole correspondant à des commentaires, dans le premier corpus de données, permet de supprimer au moins une partie des segments de parole qui sont hors-domaine. Cela permet ainsi de générer par apprentissage le modèle de langage de l'application à partir d'un corpus d'énoncés retranscrits, épuré d'une partie des données hors-domaine et donc de garantir un modèle de langage plus efficace pour la reconnaissance d'énoncés dans-le-domaine.

Selon un second mode de mise en oeuvre de l'invention, la fabrication préalable du modèle de langage général propre aux segments de parole utile, comprend les étapes suivantes :

- remplacement, dans le premier corpus de données, des segments de parole de commentaires qui ont été annotés, par une étiquette prédéfinie indiquant la présence d'un commentaire, pour former un corpus de données dit "corpus composé" ;
- ajout de ladite étiquette dans le vocabulaire général prédéfini propre à l'application vocale, pour former un vocabulaire dit "vocabulaire composé" ;
- génération par apprentissage du modèle général, à partir du corpus composé et du vocabulaire composé.

L'ajout dans le vocabulaire associé au modèle général, de l'étiquette identifiant un commentaire dans les énoncés retranscrits du premier corpus de données, permet en particulier lors de l'apprentissage du modèle général, de déterminer des probabilités relatives à la présence de commentaires dans un énoncé donné.

Selon un mode de réalisation particulier, les modèles général, noté $LM^G$, et spécifique, noté $LM^S$, sont des modèles statistiques de type N-gram, le modèle général $LM^G$ étant associé à une distribution de probabilités, notée $P^G$, représentant la probabilité d'une succession de mots donnés du vocabulaire général, et le modèle spécifique, noté $LM^S$, étant associé à une distribution de probabilités, notée $P^S$, représentant la probabilité d'une succession de mots donnés du vocabulaire spécifique ;

- la distribution de probabilités $P^G$ associée au modèle général $LM^G$, inclut les probabilités, $P^G(w|\_COMMENT\_)$ et $P^G(\_COMMENT\_|W)$, représentant respectivement la probabilité conditionnelle d'observer un mot w quelconque du vocabulaire général après un commentaire quelconque, représenté dans le vocabulaire général par l'étiquette ou symbole "_COMMENT_", et celle d'observer un commentaire quelconque, _COMMENT_, après la suite de mots W du vocabulaire général ;
- les distributions de probabilités $P^G$ et $P^S$ étant combinées dans le modèle général de sorte à former un modèle de langage composé, grâce auquel la probabilité d'une séquence quelconque de mots donnée comprenant des mots du vocabulaire général et/ou des mots du vocabulaire spécifique, peut être évaluée.

Grâce aux caractéristiques de réalisation précitées, les modèles général et spécifique sont combinés dans un modèle de langage composé associé aux distributions de probabilités $P^G$ et $P^S$, qui sont utilisées conjointement afin de pouvoir détecter et le cas échéant reconnaître un commentaire au sein d'un énoncé d'utilisateur, cet énoncé pouvant comprendre par ailleurs un ou plusieurs segments de parole dans le domaine de l'application (parole utile).

Selon une caractéristique particulière de l'invention, une chaîne de mots, reconnue au cours de la reconnaissance automatique utilisant ledit modèle de langage composé, et incluant un commentaire, est associée à des informations de marquage identifiant ledit commentaire.

Un tel marquage des commentaires, par exemple, par des balises de type balises XML, indiquant le début et la fin d'une zone de commentaire dans une séquence de parole reconnue, permet en particulier de délimiter le traitement ultérieur par un module de compréhension (SLU) au segment de parole utile pour le dialogue avec l'application vocale considérée.

Selon une autre caractéristique particulière de l'invention, une séquence de mots obtenue comme résultat de la reconnaissance automatique d'un énoncé d'un utilisateur, est déterminée selon un algorithme de type "une seule meilleure hypothèse de reconnaissance de parole" (en anglais, *one-best speech recognition hypothese*), et contient, selon le cas : seulement un commentaire, une alternance de commentaires et de séquences de mots utiles, ou seulement une séquence de mots utiles ;

- une stratégie de traitement ultérieur de la séquence reconnue, par un module de compréhension de parole, étant définie en fonction de la détection ou non d'un commentaire dans la séquence de mots reconnue.

La définition d'une stratégie de traitement d'une séquence de parole reconnue par un module de compréhension (SLU), en fonction de la détection ou non de commentaire dans cette séquence de parole, permet ainsi d'améliorer l'efficacité de la compréhension de l'énoncé de l'utilisateur.

Selon encore une autre caractéristique de l'invention, le contenu d'un commentaire détecté dans une séquence de mots reconnus, est utilisé par un module de gestion de dialogue pour adapter la réponse de l'application vocale à l'énoncé de l'utilisateur, en fonction de la nature du commentaire détecté.

Grâce à la prise en compte du contenu sémantique d'un commentaire détecté dans un énoncé utilisateur, dans le traitement effectué par un module de gestion du dialogue (application-utilisateur), la réponse apportée par l'application à l'utilisateur pourra être adaptée en fonction du commentaire, ce qui contribue à rendre l'application de dialogue plus efficace en termes de facilité d'usage et de satisfaction du point de vue utilisateur.

Corrélativement, selon un second aspect, la présente invention concerne un système de reconnaissance automatique de la parole dans un signal acoustique correspondant à un énoncé prononcé par un utilisateur dans le cadre d'une application vocale homme-machine, remarquable en qu'il comprend :

- un modèle de langage spécifique, dit "modèle spécifique", destiné à modéliser des énoncés hors-domaine prédéfinis dits "commentaires", et
- un modèle de langage, "dit modèle général", destiné à modéliser des énoncés dans-le-domaine dits "utiles",
- des moyens pour utiliser en combinaison lesdits modèles spécifique et général, afin de pouvoir détecter dans un énoncé à reconnaître la présence éventuelle d'un commentaire et générer une information de détection de commentaire si au moins un commentaire a été détecté.

La présente invention concerne aussi un modèle de langage stocké sur un support d'informations, ce modèle de langage étant utilisé pour la mise en oeuvre d'un procédé de reconnaissance automatique de la parole selon l'invention, tel que brièvement exposé plus haut. Un modèle de langage selon l'invention comprend ainsi : - d'une part, un modèle de langage spécifique, dit "modèle spécifique", destiné à modéliser des énoncés hors-domaine prédéfinis dits "commentaires" ; - d'autre part, un modèle de langage, dit "modèle général", destiné à modéliser des énoncés dans-le-domaine dits "utiles". Les modèles spécifique et général, d'un tel modèle de langage "composé" ainsi constitué, sont alors utilisés en combinaison, afin de permettre la détection dans un énoncé à reconnaître, de la présence éventuelle d'au moins un commentaire.

Enfin, la présente invention a également pour objet, un programme d'ordinateur de reconnaissance automatique de la parole. Ce programme étant remarquable en ce qu'il comporte des instructions de programme adaptées à la mise en oeuvre d'un procédé selon l'invention, tel qu'exposé supra, lorsque ce programme est exécuté par un système informatique, constituant ainsi un système de reconnaissance automatique selon l'invention.

Les avantages de ce système de reconnaissance de la parole, de ce modèle de langage composé, et ce programme d'ordinateur sont identiques à ceux mentionnés plus haut en relation avec le procédé de l'invention.

L'invention sera mieux comprise à la lecture de la description détaillée qui va suivre, donnée uniquement à titre d'exemple et faite en se référant aux dessins sur lesquels :

- la Figure 1 représente une chaîne de traitement vocal classique associée à une application de dialogue interactif, dans laquelle la présente invention peut être mise en oeuvre ;
- la Figure 2 représente un système de reconnaissance automatique de la parole dans lequel la présente invention est mise en oeuvre ;
- la Figure 3 illustre un mode de coopération des modèles de langage, général et spécifique, pour la reconnaissance automatique d'un énoncé d'utilisateur, selon un premier mode de réalisation de l'invention ;
- La Figure 4 illustre un mode de coopération des modèles de langage, général et spécifique, pour la reconnaissance automatique d'un énoncé d'utilisateur, selon un second mode de réalisation de l'invention.

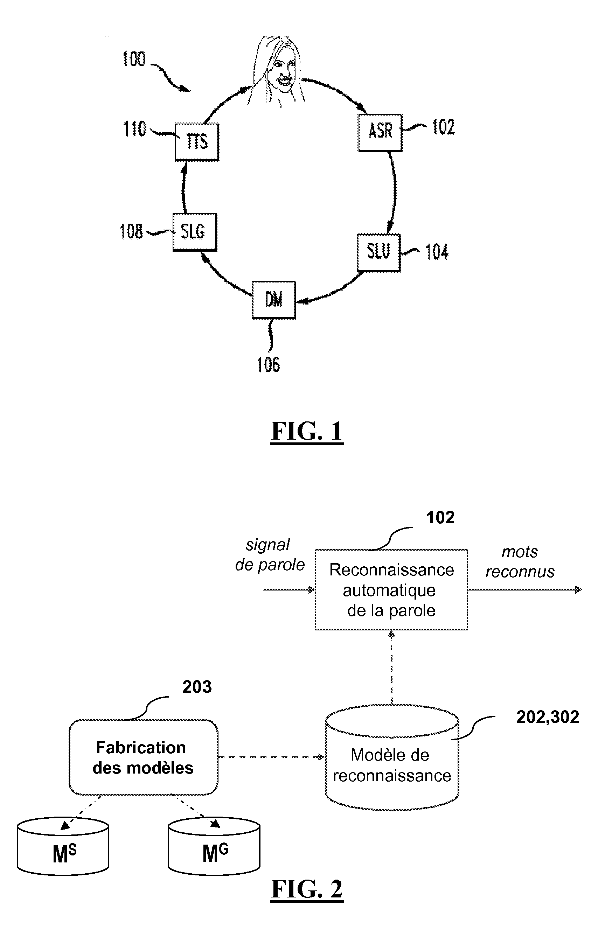

La **Figure 1** représente une chaîne de traitement vocal classique associée à une application de dialogue interactif, dans laquelle la présente invention peut être mise en oeuvre. Comme illustré à la Figure 1, un système de dialogue interactif typique est constitué d'un module 102 de reconnaissance automatique de la parole (ASR), qui reçoit en entrée un énoncé d'un utilisateur sous forme de signal acoustique numérisé et délivre en sortie une séquence retranscrite de mots reconnus. La séquence de mots reconnus est ensuite fournie à un module 104 de compréhension/interprétation de langage parlé (SLU) qui analyse d'un point de vue sémantique la séquence de mots reconnus et fournit en sortie, à un module 106 de gestion de dialogue (DM), le sens interprété de la séquence de mots reconnus. Le module DM 106 détermine alors une action à effectuer en fonction du sens de l'énoncé décodé. Cette action est typiquement une réponse sous forme d'un ou plusieurs mots. La génération de la réponse est alors assurée par un module 108 de génération de langage parlé (*Spoken Language Generation,* SLG, en anglais). Le module SLG 108 fournit alors les instructions nécessaires à un module 110 de génération de parole à partir de texte *(Text To Speech,* TTS, en anglais) afin que ce dernier génère une réponse audible à destination de l'utilisateur.

La présente invention est préférentiellement mise en oeuvre dans le cadre de la reconnaissance automatique de la parole. Comme représenté à la **Figure 2**, l'invention est incorporée dans un module 102 de reconnaissance automatique de la parole (ASR), lequel utilise pour effectuer son traitement un modèle acoustique (non représenté) et un modèle de langage 202 ou 302 (selon le mode de réalisation choisi). Le traitement initial est un traitement acoustique permettant d'extraire du signal acoustique une image acoustique la plus significative possible sur des tranches de temps prédéfinies, par exemple 16 ms (millisecondes). L'utilisation du modèle acoustique après le traitement acoustique permet alors de déterminer une probabilité pour que le signal acoustique corresponde à chacun des phonèmes de la langue cible. L'utilisation du modèle de langage (*Language Model,* LM, en anglais) permet ensuite au module ASR de déterminer des hypothèses de suite de mots correspondant au signal acoustique d'entrée, en fonction de probabilités prédéterminées de chaque suite de mots dans le langage modélisé (langage cible).

Comme mentionné plus haut dans la présente description, lors de la reconnaissance d'un énoncé d'utilisateur, il arrive que des portions d'énoncés ou des énoncés entiers soient hors-domaine. Ces fragments de parole hors-domaine peuvent être de différents types. En particulier, il peut s'agir de paroles prononcées par l'utilisateur à l'attention d'une tierce personne, auquel cas, compte tenu de la variabilité de tels propos hors-domaine, leur modélisation est très difficile. En revanche, dans le cas de commentaires formulés par l'utilisateur à l'égard du service vocal qu'il utilise, la modélisation est plus aisée, le champ sémantique concerné étant plus étroit. Par ailleurs, on note que l'apparition de mots ou fragments de parole hors-domaine est en général plus fréquente lorsque les utilisateurs sont des utilisateurs novices ou non encore familiarisés avec le service vocal en question. Il est donc important de pouvoir traiter ce type de commentaires dans le processus de reconnaissance, et ce d'autant plus lorsque la mise en service de l'application vocale en question est récente.

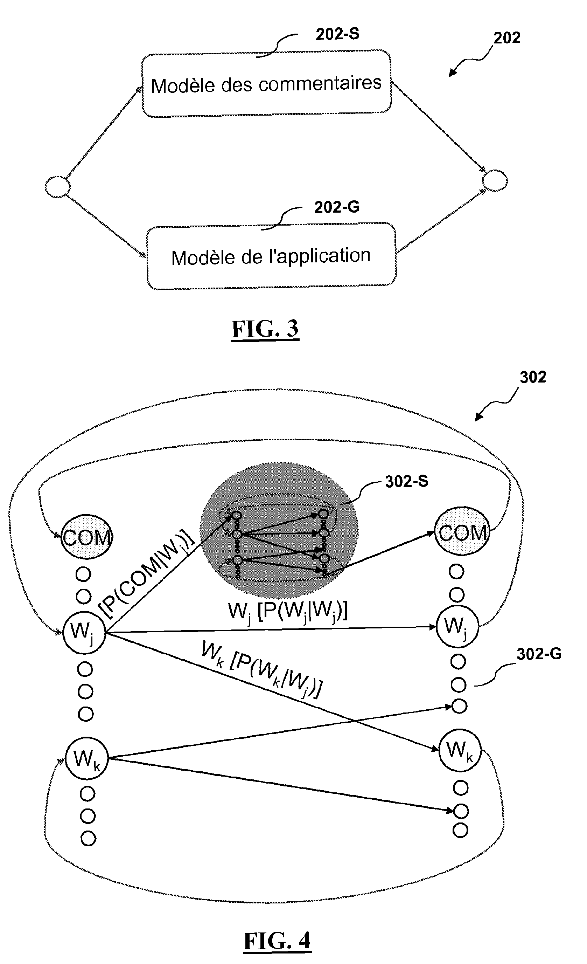

Un système de reconnaissance automatique de la parole conforme à la présente invention est basé sur l'utilisation conjointe de deux modèles de langage formant un modèle composé, identifié à la Figure 2 par la référence 202 ou 302 selon le mode de réalisation choisi (cf. Fig. 3 et Fig. 4). Ces deux modèles de langage sont fabriqués au préalable lors d'une phase de fabrication, 203, des modèles. Cette phase de fabrication consiste, d'une part, à constituer un modèle de langage spécifique, désigné par "modèle spécifique" et noté $M^S$, destiné à modéliser des énoncés hors-domaine prédéfinis, en l'occurrence des commentaires d'utilisateurs, du type mentionné plus haut ; et d'autre part, un modèle de langage, désigné par "modèle général" et noté $M^G$, destiné à modéliser des énoncés dans-le-domaine, c'est-à-dire des énoncés utiles pour le dialogue homme-machine.

De manière pratique les modèles de langage et les corpus de données d'apprentissage à partir desquels ils sont générés, sont mis en oeuvre sous forme de bases de données numériques stockées typiquement dans une mémoire de masse d'un système informatique, associées à des programmes logiciels gérant l'accès et la mise à jour de ces données.

Dans le mode de réalisation choisi, la fabrication du modèle de langage spécifique aux commentaires, $M^S$, comprend initialement la constitution d'un premier corpus d'apprentissage contenant des données d'apprentissage obtenues par retranscription d'énoncés enregistrés lors d'interactions homme-machine utilisant l'application vocale. Ces données retranscrites sont ensuite annotées de manière à séparer les segments de parole de commentaire des segments de parole utile. Cette annotation est faite en pratique manuellement par un opérateur humain, et utilise des balises de début et de fin de séquence.

L'extraction des zones balisées dans le premier corpus permet alors de constituer le corpus d'apprentissage pour le modèle spécifique aux commentaires. On donne ci-après des exemples d'interactions retranscrites et le corpus spécifique qui en résulte après extraction.

- Exemple d'interactions retranscrites :

  • *[commentaire:] c'est bizarre ce truc [:commentaire] je veux un renseignement*
  • *oui c'est ça [commentaire:] ça fait trois fois que je lui dis la même chose [:commentaire]*
  • *[commentaire:] oh mais c'est pas vrai [:commentaire]*
  • *[commentaire:] et bien voilà maintenant ça marche [:commentaire]*

- Corpus spécifique extrait :

  • *c'est bizarre ce truc*
  • *ça fait trois fois que je lui dis la même chose*
  • *oh mais c'est pas vrai*
  • *et bien voilà maintenant ça marche*

Ensuite un vocabulaire (ou lexique) propre aux commentaires, est défini. Cela peut être effectué à la fois de façon automatique à partir des données extraites, et de façon supervisée à partir de connaissances a *priori.*

Enfin, le modèle de langage spécifique aux commentaires est généré par apprentissage à partir du corpus spécifique aux commentaires, c'est-à-dire le corpus spécifique extrait, et du vocabulaire spécifique aux commentaires, désigné ici par "vocabulaire spécifique". La nature du modèle de langage peut être de diverses natures, par exemple : N-gram, bi-gram ou utilisant une grammaire stochastique.

Selon un premier mode de mise en oeuvre de l'invention, le modèle de langage général de l'application vocale, c'est-à-dire le modèle permettant d'identifier des segments de parole utile dans un énoncé utilisateur donné, est obtenu par apprentissage à partir du corpus de données initial - c'est-à-dire le premier corpus, après extraction des segments de parole de commentaire annotés - et d'un vocabulaire (lexique) prédéfini propre à l'application vocale, et désigné ici par "vocabulaire général".

Dans ce mode de réalisation, les modèles spécifique et général peuvent être alors associés "en parallèle" pour être utilisé de manière combinée afin de pouvoir détecter, dans un énoncé à reconnaître, la présence éventuelle d'un commentaire. La **Figure 3** illustre ce mode de coopération en parallèle entre les deux modèles de langage, général et spécifique. A la Figure 3, le modèle de reconnaissance 202 selon l'invention est constitué de deux "sous-modèles" de langage : un modèle 202-S propre à modéliser des commentaires, et un modèle 203-G classique, propre à modéliser les interactions utilisateur-serveur vocal dans le cadre de l'application vocale considérée. Dans ce mode de réalisation, une séquence de parole à reconnaître est analysée en parcourant, selon l'algorithme de décision utilisé, les graphes de décision correspondant aux machines d'états de l'un et/ou de l'autre des deux sous-modèles de langage. A la sortie du processus de reconnaissance, l'énoncé analysé, sera alors reconnu, soit en tant que séquence de parole de commentaires, soit en tant que séquence de paroles utile (dans-le-domaine). Ce mode de réalisation est donc simple à mettre en oeuvre et efficace, cependant il ne permet uniquement de reconnaître, de manière exclusive, que soit un commentaire soit un énoncé utile, mais pas d'identifier un commentaire au sein d'un énoncé utile.

Conformément à l'invention, les deux sous-modèles spécifique et général peuvent être combinés selon un second mode de réalisation (représenté à la Figure 4). Selon ce mode de réalisation, le modèle de langage général propre aux segments de parole utile, est construit toujours à partir du premier corpus de données. Mais à la différence du mode de réalisation précédent, les segments de parole annotés correspondant à des commentaires, ne sont pas supprimés du corpus, mais remplacés par une étiquette prédéfinie indiquant la présence dans le segment considéré, d'un commentaire. Le corpus de données ainsi obtenu, est désigné ici par "corpus composé". Corrélativement, l'étiquette utilisée pour indiquer un commentaire dans le corpus composé, est ajoutée dans le vocabulaire de l'application vocale précédemment désigné par "vocabulaire général". Le vocabulaire ainsi obtenu est désigné ici par "vocabulaire composé". Enfin, le modèle de langage général est alors obtenu par apprentissage à partie du corpus composé et du vocabulaire composé.

L'ajout dans le vocabulaire associé au modèle général, de l'étiquette identifiant un commentaire, par exemple "_COMMENT_", dans les énoncés retranscrits du premier corpus de données, permet en particulier, lors de l'apprentissage du modèle général, de déterminer des probabilités relatives à la présence de commentaires dans un énoncé donné.

Dans la mise en oeuvre décrite de l'invention, les modèles général, $LM^G$, et spécifique, $LM^S$, sont des modèles statistiques reposant sur des grammaires statistiques de type N-gram. On rappelle ici qu'une grammaire statistique basée sur un modèle N-gram utilise le principe selon lequel, à partir d'une séquence d'unités vocales (lettre, phonème, mot), il est possible d'obtenir la fonction de vraisemblance de l'unité vocale suivante. A partir d'un corpus d'apprentissage, il est ainsi possible de construire une distribution de probabilités pour la prochaine unité vocale, avec un historique de taille N. Cette modélisation correspond à un modèle de Markov d'ordre N où seules les N dernières observations sont utilisées pour la prédiction de l'unité vocale suivante. Ainsi un bi-gram est un modèle de Markov d'ordre 2.

Concernant le mode de réalisation exposé de l'invention, le modèle général $LM^G$ est associé à une distribution de probabilités, notée $P^G$, représentant la probabilité d'une succession de mots donnés du vocabulaire général ; et le modèle spécifique, noté $LM^S$, est associé à une distribution de probabilités, notée $P^S$, représentant la probabilité d'une succession de mots donnés du vocabulaire spécifique, c'est-à-dire la probabilité d'observer une séquence de mots correspondant à un commentaire.

Selon l'invention, la distribution de probabilités $P^G$ associée au modèle général $LM^G$, inclut en outre les probabilités notées : $P^G(w|\_COMMENT\_)$, $P^G(\_COMMENT\_|W)$ qui représentent respectivement la probabilité conditionnelle d'observer un mot w quelconque du vocabulaire général après un commentaire quelconque, _COMMENT_, et celle d'observer un commentaire quelconque, _COMMENT_, après une suite de mots W donnée du vocabulaire général. Si l'on utilise des modèles bi-grams les probabilités précitées représentent respectivement la probabilité du mot w "sachant" un commentaire _COMMENT_, et la probabilité d'un commentaire _COMMENT_ "sachant" le mot w (dans ce cas, la suite W de mots, se réduit à un seul mot w).

Dans ce mode de réalisation, les distributions de probabilités $P^G$ et $P^S$ associées aux modèles général $LM^G$ et spécifique $LM^S$, sont combinées dans le modèle général de sorte à former un modèle de langage composé, grâce auquel la probabilité d'une séquence quelconque de mots donnée, comprenant des mots du vocabulaire général et/ou des mots du vocabulaire spécifique, peut être évaluée. Grâce à ce modèle "composé" associé aux distributions de probabilités $P^G$ et $P^S$, il est possible, contrairement au premier mode de réalisation illustré par la Figure 3, de détecter et reconnaître un commentaire au sein d'un énoncé d'utilisateur, cet énoncé comprenant par ailleurs au moins un segment de parole dans le domaine de l'application (parole utile).

La **Figure 4** illustre un tel mode de mise en oeuvre, selon lequel le sous-modèle spécifique propre aux commentaires est, en quelque sorte, intégré dans le modèle général propre à l'application vocale. Dans le modèle de langage composé 302 représenté à la Figure 4, le modèle spécifique 302-S est un modèle bi-gram intégré dans le modèle bi-gram sur lequel est basé le modèle général 302-G. Ainsi, chaque mot du vocabulaire $\{w_1,...w_i,w_j,w_k,...w_N\}$ est représenté par deux états : un dans la partie gauche et un dans la partie droite de la figure. Une transition entre un état $w_n$ de la partie gauche et un état $w_m$ de la partie droite signifie que l'on observe le mot $w_m$ à la suite du mot $w_n$. En pratique, cette transition est associée à un coût, issu du modèle de langage de type bi-gram, à savoir la probabilité conditionnelle du mot $w_m$ sachant le mot $w_n$ notée "$P(w_m|w_n)$". Une transition de retour, partant d'un état correspondant à un $w_i$ de la partie droite vers l'état du même mot en partie gauche, permet de reboucler et de parcourir à la suite les successeurs possibles de l'état $w_i$.

Dans le modèle général 302-G, l'étiquette _COMMENT_ qui fait partie du vocabulaire général, correspond à un état spécifique noté "COM" sur la figure, au même titre que pour les autres mots du vocabulaire de l'application vocale. L'observation d'un commentaire qui succède au mot $w_j$ est rendue possible en "intercalant", lors du processus du décodage par recherche d'hypothèses les plus vraisemblables, l'automate d'états (réseau de décisions) associé au sous-modèle de commentaires, 302-S, sur la transition qui relie l'état du mot $w_j$ en partie gauche, et l'état COM correspondant à un commentaire, en partie droite. La probabilité d'observer un commentaire après le mot $w_j$ ($P(COM|w_j)$) est appliquée ici avant d'entrer dans le sous-modèle (302-S) de commentaires, afin de procéder à la reconnaissance spécifique du commentaire (identification du commentaire). On donne ci-après, un exemple d'énoncé décodé en utilisant le modèle de langage composé selon l'invention.

On considère un énoncé E composé de la séquence de mots $\{w_1, w_2, w_3, w_4, w_5, w_6, w_7, w_8\}$ où la sous-séquence $\{w_3, w_4, w_5, w_6\}$ est un commentaire.

Selon le modèle de langage général, la partie utile de l'énoncé est "vue" de la manière suivante :

$$\text{<s> } w_1 \; w_2 \; \_COMMENT\_ \; w_7 \; w_8 \text{ </s>}$$

Où : "_COMMENT_" est l'étiquette remplaçant la sous-séquence de commentaire, et <s> et </s> représentent respectivement les symboles de début et de fin d'énoncé.

Selon le modèle de langage spécifique, la sous-séquence de commentaire est "vue" de la manière suivante :

$$\text{<COM> } w_3 \; w_4 \; w_5 \; w_6 \text{ </COM>}$$

Où : <COM> et </COM> représentent respectivement les symboles de début et de fin de la séquence de commentaire.

La probabilité totale P(E) de l'énoncé E, est alors calculée de la façon suivante, en combinant les distributions de probabilités $P^G$ et $P^S$ associées respectivement aux modèles général $LM^G$ et spécifique $LM^S$ :

$$P(E) = P^G(w_1 \mid \text{<s>}) \cdot P^G(w_2 \mid w_1) \cdot P^G(\_COMMENT\_ \mid w_2) \cdot P^S(w_3 \mid \text{<COM>}) \cdot$$
$$P^S(w_4 \mid w_3) \cdot P^S(w_5 \mid w_4) \cdot P^S(w_6 \mid w_5) \cdot P^S(\text{</COM>} \mid w_6) \cdot P^G(w_7 \mid \_COMMENT\_) \cdot$$
$$P^G(w_8 \mid w_7) \cdot P^G(\text{</s>} \mid w_8)$$

(L'opérateur '·' désignant la multiplication dans l'ensemble des nombres réels)

Ainsi, l'utilisation du modèle de langage composé décrit ci-dessus, intégrant un sous-modèle spécifique aux commentaires dans le modèle général de l'application vocale, permet non seulement la détection d'un commentaire dans un énoncé l'utilisateur, mais permet également d'identifier la nature de ce commentaire. Lorsqu'un commentaire a été détecté, une information de détection de commentaire est alors générée.

Selon l'invention, lorsqu'une une chaîne de mots, reconnue au cours de la reconnaissance automatique utilisant le modèle de langage composé, inclut un commentaire, cette chaîne de mots est associée à des informations de marquage destinées à identifier ce commentaire.

Un tel marquage des commentaires est effectué, de manière automatique par le module de reconnaissance, par exemple au moyen de balises de type balises XML, indiquant le début et la fin d'une zone de commentaire dans une séquence de parole reconnue.

Lorsque l'invention est mise en oeuvre de manière à détecter uniquement la présence d'un commentaire (cas du mode de réalisation illustré à la Figure 3), le module ASR de reconnaissance fournit uniquement l'indication selon laquelle un commentaire a été détecté dans l'énoncé utilisateur traité, en utilisant un marqueur dédié (par exemple _COMMENT_).

Exemple, pour l'énoncé : *"mais c'est pas vrai je veux des renseignements"*, la sortie de reconnaissance serait : "*_COMMENT_*".

Il est à noter que les modes de réalisations décrits en relation avec les figures 3 et 4, peuvent être combinés, afin notamment d'améliorer la détection de commentaires isolés, dans un énoncé. D'autre part, les modes de réalisation précités peuvent être, dans la pratique, exploités indifféremment dans le cas d'une reconnaissance avec modèle compilé ou dans le cas d'une reconnaissance multi-niveaux.

Lorsque l'invention est mise en oeuvre selon le second mode de réalisation (modèle de langage composé), le module ASR fournit l'ensemble des mots reconnus, y compris les mots correspondant à une portion de commentaire, associée à l'émission d'un marqueur d'entrée et d'un marqueur de sortie du sous-modèle de commentaires, permettant d'isoler les portions détectées comme étant des commentaires des autres portions utiles. Pour le même exemple, la sortie du module ASR est alors, en utilisant par exemple le principe des balises XML : "<COMMENT> mais c'est pas vrai </COMMENT> je veux des renseignements". Bien sûr, tout mode d'annotation permettant un balisage de portions d'énoncé peut être utilisé.

En pratique, on peut utiliser un algorithme de type "une seule meilleure hypothèse de reconnaissance de parole" (en anglais, *one-best speech recognition hypothese*), pour déterminer une séquence de mots en tant que résultat de la reconnaissance automatique (sortie du module ASR). La séquence de mots obtenue contient alors, selon le cas : seulement un commentaire, un commentaire et une séquence de mots utiles, ou seulement une séquence de mots utiles. L'information selon laquelle un commentaire est détecté dans l'énoncé utilisateur reconnu peut ensuite être utilisée par le module SLU de compréhension, par la prise en compte de la détection dans sa stratégie de décision.

Ainsi, par exemple, si la sortie du module ASR est simplement l'étiquette indiquant un commentaire (_ COMMENT_) l'énoncé est simplement rejeté par le système de dialogue ; si la sortie du module ASR correspond à une séquence de mots utiles et une étiquette indiquant un commentaire, seule la séquence de mots utile pourra être traitée par le module SLU avec l'information selon laquelle l'énoncé reconnu est bruité. Enfin, si le résultat de la reconnaissance par le module ASR ne contient pas d'information de détection de commentaire, ce résultat est fourni directement au module SLU pour interprétation sémantique.

Lorsque le modèle de langage composé (cf. Figure 4) est utilisé, le contenu d'un commentaire détecté dans un énoncé traité, est également décodé (c'est-à-dire identifié). Le contenu d'un commentaire détecté peut être alors utilisé avantageusement par le module de gestion de dialogue DM pour adapter la réponse de l'application vocale à l'énoncé de l'utilisateur, en fonction de la nature du commentaire détecté. Cela contribue alors à rendre l'application de dialogue plus efficace en termes de facilité d'usage et de satisfaction du point de vue utilisateur. Dans ce cas, en fonction de l'interprétation sémantique du commentaire identifié, plusieurs stratégies de dialogue peuvent être adoptées :

- Émettre un prompt particulier de nature à rassurer l'utilisateur.
- Dans le cas d'un système fonctionnant avec une restitution en synthèse vocale, on peut modifier la prosodie normalement utilisée sur le prompt suivant de façon à adopter une prosodie plus rassurante.
- Le dialogue peut basculer sur un opérateur humain, par exemple, dans le cas d'une approche mixte serveur vocal-opérateur. L'opérateur peut d'ailleurs être "caché" comme c'est le cas dans les approches de type RVAO (reconnaissance vocale assistée par opérateur).

Le procédé de reconnaissance automatique de la parole selon la présente invention, tel que décrit supra, est en pratique mis en oeuvre par un dispositif de reconnaissance automatique de la parole, par exemple dans un serveur vocal interactif implanté dans un réseau de télécommunications. Un tel dispositif comporte donc des moyens matériels notamment électroniques et/ou logiciels adaptés à mettre en oeuvre un procédé selon l'invention.

Selon une implémentation préférée, les étapes du procédé de reconnaissance, selon l'invention, sont déterminées par les instructions d'un programme d'ordinateur utilisé dans un tel dispositif de traitement vocal, constitué typiquement par un système informatique, par exemple un ordinateur personnel.

Le procédé selon l'invention est alors mis en oeuvre lorsque le programme précité est chargé dans des moyens informatiques incorporés dans le dispositif de traitement vocal, et dont le fonctionnement est alors commandé par l'exécution du programme.

On entend ici par "programme d'ordinateur" un ou plusieurs programmes d'ordinateur formant un ensemble (logiciel) dont la finalité est la mise en oeuvre de l'invention lorsqu'il est exécuté par un système informatique approprié.

En conséquence, l'invention a également pour objet un tel programme d'ordinateur, en particulier sous la forme d'un logiciel stocké sur un support d'informations. Un tel support d'informations peut être constitué par n'importe quelle entité ou dispositif capable de stocker un programme selon l'invention.

Par exemple, le support en question peut comporter un moyen de stockage matériel, tel qu'une ROM, par exemple un CD ROM ou une ROM de circuit microélectronique, ou encore un moyen d'enregistrement magnétique, par exemple un disque dur. En variante, le support d'informations peut être un circuit intégré dans lequel le programme est incorporé, le circuit étant adapté pour exécuter ou pour être utilisé dans l'exécution du procédé en question.

D'autre part, le support d'informations peut être aussi un support immatériel transmissible, tel qu'un signal électrique ou optique pouvant être acheminé via un câble électrique ou optique, par radio ou par d'autres moyens. Un programme selon l'invention peut être en particulier téléchargé sur un réseau de type Internet.

D'un point de vue conception, un programme d'ordinateur selon l'invention peut utiliser n'importe quel langage de programmation et être sous la forme de code source, code objet, ou de code intermédiaire entre code source et code objet (par ex., une forme partiellement compilée), ou dans n'importe quelle autre forme souhaitable pour implémenter un procédé selon l'invention.

**Revendications**

1. **Procédé** de reconnaissance automatique de la parole dans un signal acoustique correspondant à un énoncé prononcé par un utilisateur dans le cadre d'une application vocale homme-machine, **caractérisé en qu'**il comprend les étapes de :

- fabrication (203) préalable, d'une part, d'un modèle de langage spécifique (202-S, 302-S), dit "modèle spécifique", destiné à modéliser des énoncés hors-domaine prédéfinis dits "commentaires", et d'autre part, d'un modèle de langage (202-G, 302-G), dit "modèle général", destiné à modéliser des énoncés dans-le-domaine dits "utiles" ;
- utilisation en combinaison desdits modèles spécifique et général, afin de pouvoir détecter dans un énoncé à reconnaître la présence éventuelle d'au moins un commentaire ; et
- génération d'une information de détection de commentaire si au moins un commentaire a été détecté.

2. Procédé selon la revendication 1, **caractérisé en ce que** la fabrication préalable du modèle de langage spécifique aux commentaires comprend les étapes de :

- constitution d'un premier corpus d'apprentissage contenant des données d'apprentissage obtenues par retranscription d'énoncés enregistrés lors d'interactions homme-machine utilisant l'application vocale ;
- annotation des données d'apprentissage du premier corpus de données de manière à séparer les segments de parole de commentaire des segments de parole utile ;
- création d'un second corpus d'apprentissage spécifique aux commentaires, par extraction des segments de commentaire annotés du premier corpus d'apprentissage ;
- définition d'un vocabulaire propre aux commentaires ;
- génération par apprentissage du modèle de langage spécifique aux commentaires à partir du corpus spécifique aux commentaires et du vocabulaire spécifique aux commentaires, dit "vocabulaire spécifique".

3. Procédé selon la revendication 2, **caractérisé en ce que** la fabrication préalable du modèle de langage général propre aux segments de parole utile, comprend la génération par apprentissage du modèle général à partir du premier corpus de données, après extraction des segments de parole de commentaire annotés, et d'un vocabulaire prédéfini propre à l'application vocale, dit "vocabulaire général".

4. Procédé selon la revendication 3, **caractérisé en ce que** la fabrication préalable du modèle de langage général propre aux segments de parole utile, comprend les étapes de :

- remplacement, dans ledit premier corpus de données, des segments de parole de commentaires qui ont été annotés, par une étiquette prédéfinie indiquant la présence d'un commentaire, pour former un corpus de données dit "corpus composé" ;
- ajout de ladite étiquette dans le vocabulaire général prédéfini propre à l'application vocale, pour former un vocabulaire dit "vocabulaire composé" ;
- génération par apprentissage du modèle général, à partir du corpus composé et du vocabulaire composé.

5. Procédé selon la revendication 4, **caractérisé en ce que** :

- lesdits modèles général, noté $LM^G$, et spécifique, noté $LM^S$, sont des modèles statistiques de type N-gram, ledit modèle général $LM^G$ étant associé à une distribution de probabilités, notée $P^G$, représentant la probabilité d'une succession de mots donnés du vocabulaire général, et ledit modèle spécifique $LM^S$ étant associé à une distribution de probabilités, notée $P^S$, représentant la probabilité d'une succession de mots donnés du vocabulaire spécifique ;
- la distribution de probabilités $P^G$ associée au modèle général $LM^G$, inclut les probabilités, $P^G(w|\_COMMENT\_)$ et $P^G(\_COMMENT\_|W)$, représentant respectivement la probabilité conditionnelle d'observer un mot w quelconque du vocabulaire général après un commentaire quelconque, représenté dans le vocabulaire général par l'étiquette "\_COMMENT\_", et celle d'observer un commentaire quelconque, \_COMMENT\_, après la suite de mots W du vocabulaire général ;
- les distributions de probabilités $P^G$ et $P^S$ étant combinées dans le modèle général de sorte à former un modèle de langage composé, grâce auquel la probabilité d'une séquence quelconque de mots donnée comprenant des mots du vocabulaire général et/ou des mots du vocabulaire spécifique, peut être évaluée.

6. Procédé selon la revendication 5, **caractérisé en ce qu'**une chaîne de mots, reconnue au cours de la reconnaissance automatique utilisant ledit modèle de langage composé, et incluant un commentaire, est associée à des informations de marquage identifiant ledit commentaire.

**7.** Procédé selon la revendication 6, **caractérisé en ce que** :

- une séquence de mots obtenue comme résultat de la reconnaissance automatique d'un énoncé d'un utilisateur, est déterminée selon un algorithme de type "une seule meilleure hypothèse de reconnaissance de parole", et contient, selon le cas : seulement un commentaire, une alternance de commentaires et de séquences de mots utiles, ou seulement une séquence de mots utiles ;
- une stratégie de traitement ultérieur de la séquence reconnue, par un module de compréhension de parole, étant définie en fonction de la détection ou non d'un commentaire dans la séquence de mots reconnue.

**8.** Procédé selon la revendication 7, **caractérisé en ce que** le contenu d'un commentaire détecté dans une séquence de mots reconnus, est utilisé par un module de gestion de dialogue pour adapter la réponse de l'application vocale à l'énoncé de l'utilisateur, en fonction de la nature du commentaire détecté.

**9.** **Système** de reconnaissance automatique de la parole dans un signal acoustique correspondant à un énoncé prononcé par un utilisateur dans le cadre d'une application vocale homme-machine, **caractérisé en qu'**il comprend :

- un modèle de langage spécifique (202-S, 302-S), dit "modèle spécifique", destiné à modéliser des énoncés hors-domaine prédéfinis dits "commentaires", et
- un modèle de langage (202-G, 302-G), "dit modèle général", destiné à modéliser des énoncés dans-le-domaine dits "utiles",
- des moyens (102) pour utiliser en combinaison lesdits modèles spécifique et général, afin de pouvoir détecter dans un énoncé à reconnaître la présence éventuelle d'un commentaire et générer une information de détection de commentaire si au moins un commentaire a été détecté.

**10.** Système selon la revendication 9, **caractérisé en ce qu'**il comprend des moyens pour la mise en oeuvre d'un procédé de reconnaissance selon l'une quelconque de revendications 2 à 8.

**11.** **Modèle de langage** (202, 302) stocké sur un support d'informations, ledit modèle de langage étant utilisé pour la mise en oeuvre d'un procédé de reconnaissance automatique de la parole selon l'une quelconque des revendications 1 à 8, ledit modèle comprenant :

- d'une part, un modèle de langage spécifique (202-S, 302-S), dit "modèle spécifique", destiné à modéliser des énoncés hors-domaine prédéfinis dits "commentaires", et
- d'autre part, un modèle de langage (302-S, 302-G), dit "modèle général", destiné à modéliser des énoncés dans-le-domaine dits "utiles" ; lesdits modèles spécifique et général étant utilisés en combinaison, afin de permettre la détection, dans un énoncé à reconnaître, de la présence éventuelle d'au moins un commentaire.

**12.** **Programme** d'ordinateur de reconnaissance automatique de la parole, **caractérisé en ce qu'**il comporte des instructions de programme adaptées à la mise en oeuvre d'un procédé selon l'une quelconque des revendications 1 à 8, lorsque ledit programme est exécuté par un système informatique approprié.

**FIG. 1**

**FIG. 2**

202-S

Modèle des commentaires

202

202-G

Modèle de l'application

## FIG. 3

302

302-S

COM

$[P(COM|W_j)]$

COM

$W_j\ [P(W_j|W_j)]$

$W_j$

$W_j$

302-G

$W_k\ [P(W_k/W_j)]$

$W_k$

$W_k$

## FIG. 4

**EP 1 981 020 A1**

**Office européen des brevets**

**RAPPORT DE RECHERCHE EUROPEENNE**

Numéro de la demande

EP 08 15 4423

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | IAN LANE ET AL: "Out-of-Domain Utterance Detection Using Classification Confidences of Multiple Topics" IEEE TRANSACTIONS ON AUDIO, SPEECH, AND LANGUAGE PROCESSING, IEEE SERVICE CENTER, NEW YORK, NY, US, vol. 15, no. 1, janvier 2007 (2007-01), pages 150-161, XP011145322 ISSN: 1558-7916 * le document en entier * | 1-12 | INV. G10L15/18 G10L15/22 |
| P,X | DAMNATI G ET AL: "Spoken language understanding strategies on the France Telecom 3000 voice agency corpus" 2007 IEEE INTERNATIONAL CONFERENCE ON ACOUSTICS, SPEECH, AND SIGNAL PROCESSING, vol. IV, 15 avril 2007 (2007-04-15), - 20 avril 2007 (2007-04-20) pages 9-12, XP002460817 HONOLULU, HI, USA ISBN: 1-4244-0727-3 * abrégé * * section 3 * | 1-12 | |
| P,X | G. DAMNATI, F. BECHET AND R. DE MORI: "Experiments on the France Telecom 3000 Voice Agency corpus: academic research on an industrial spoken dialog system" NAACL-HLT, 22 avril 2007 (2007-04-22), - 27 avril 2007 (2007-04-27) pages 48-55, XP002460818 Rochester, NY, USA * abrégé * * section 3* | 1-12 | |

**DOMAINES TECHNIQUES RECHERCHES (IPC)**

G10L

Le présent rapport a été établi pour toutes les revendications

| Lieu de la recherche | Date d'achèvement de la recherche | Examinateur |
|---|---|---|
| La Haye | 7 août 2008 | Quélavoine, Régis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant